Europäisches Patentamt

European Patent Office

Office européen des brevets

(11) Publication number: **0 272 883 B1**

# EUROPEAN PATENT SPECIFICATION

(45) Date of publication of patent specification: **16.10.91** (51) Int. Cl.⁵: **G03C 11/00**, C02F 9/00

(21) Application number: **87311136.3**

(22) Date of filing: **17.12.87**

(54) **Method of concentrating photographic process waste liquor by evaporation.**

(30) Priority: **17.12.86 JP 300510/86**
**18.12.86 JP 302543/86**

(43) Date of publication of application:
**29.06.88 Bulletin 88/26**

(45) Publication of the grant of the patent:
**16.10.91 Bulletin 91/42**

(84) Designated Contracting States:
**DE FR GB IT NL**

(56) References cited:
**DE-A- 3 404 248**
**US-A- 3 995 298**
**US-A- 4 613 412**
**US-A- 4 640 769**

(73) Proprietor: **KONICA CORPORATION**
**26-2, Nishishinjuku 1-chome, Shinjuku-ku**
**Tokyo 160(JP)**

(72) Inventor: **Kobayashi, Kazuhiro**
**c/o Konica Corporation 1 Sakura-machi**
**Hino-shi Tokyo(JP)**
Inventor: **Goto, Nobutaka**
**c/o Konica Corporation 1 Sakura-machi**
**Hino-shi Tokyo(JP)**
Inventor: **Koboshi, Shigeharu**
**c/o Konica Corporation 1 Sakura-machi**
**Hino-shi Tokyo(JP)**
Inventor: **Kurematsu, Masayuki**
**c/o Konica Corporation 1 Sakura-machi**
**Hino-shi Tokyo(JP)**
Inventor: **Takabayashi, Naoki**
**c/o Konica Corporation 1 Sakura-machi**
**Hino-shi Tokyo(JP)**

(74) Representative: **Ellis-Jones, Patrick George**
**Armine et al**
**J.A. KEMP & CO. 14 South Square Gray's Inn**
**London WC1R 5EU(GB)**

**Description**

This invention relates to a method of concentrating photographic process waste liquor by evaporation, particularly a method that is suited for treating waste liquor produced along with development processing of light-sensitive photographic materials using an automatic processing machine, inside the automatic processing machine or in the vicinity thereof without the need of collection thereof.

In general, in the case of black and white silver halide light-sensitive photographic materials, photographic processing of the materials is carried out in steps comprising developing, fixing and washing, and in the case of light-sensitive color photographic materials, in steps comprising color developing, bleach-fixing (or bleaching and fixing), washing and stabilizing.

In photographic processing of a large quantity of light-sensitive materials, the performance of processing solutions is constantly maintained by removing components that are concentrated during the processing by precipitating out in the processing solution or by evaporation (for example, bromide ions in the developing solution, silver ions in the fixing solution), while replenishing components consumed in the processing. A replenishing solution is used for the above replenishing, and a part of the processing solution is thrown away to remove the concentrated components in the photographic processing.

In recent years, because of environmental pollution or for economic reasons, the processing solutions and washing water as well are undergoing a change in that the quantity of replenishment has been greatly decreased. The photographic process waste liquor is led from a processing tank of the automatic processing machine through a waste liquor pipe and dicarded in the sewerage system after having been diluted with washing water waste liquor or cooling water for the automatic processing machine.

However, because of tightened control in recent years against environmental pollution, although it is possible to discard washing water or cooling water in the sewerage system or rivers, it has been made substantially impossible to discard photographic processing solutions other than these [for example, developing solutions, fixing solutions, color-developing solutions, bleach-fixing solutions (or bleaching solutions or fixing solutions) and stabilizing solutions.]. Known methods for pollution-preventive treatment to decrease the burden to environmental pollution caused by photographic process waste liquor include, for example, an activated sludge method (JP-B-7952/1976, JP-B-12943/1976), an evaporation method (JP-A-89437/1974, JP-B-33996/1981), an electrolytic oxidation method JP-A-84462/1973, JP-A-119457/1974, JP-A-119458/1974 and JP-B-43478/1978), an ion-exchange method (JP-B-37704/1976, JP-B-43271/1978 and JP-A-383/1978), a reverse osmosis method (JP-A-22463/1975), and a chemical treatment method JP-A-64257/1974, JP-A-12152/1978, JP-A-58833/1974, JP-A-63763/1978, JP-B-37395/1982 and JP-B-37396/1982), which, however, cannot be said to be sufficient. Accordingly, in general, the waste liquor is collected by waste liquor collecting dealers, and made harmless after secondary and tertiary treatments. However because of the increase in collection costs, not only are the fees for collecting the waste liquor increased year by year, but also the dealers are not willing to come to miniature photofinishing laboratories to collect the waste liquor because of its low collection efficiency, thus causing problems in that the shops are full of waste liquor.

To solve these problems and to make it possible to readily carry out treatment of photographic process waste liquor in miniature photofinishing laboratories, studies have been made on heating the photographic process waste liquor to evaporate all the water or to effect solidification as disclosed, for example, in Japanese Utility Model Unexamined Publication No. 71841/1985. The inventors have disclosed that harmful or very ill-smelling gases such as sulfite gas, hydrogen sulfide and ammonia may be generated when photographic process waste liquor is subjected to the evaporation treatment. These were found to be generated because ammonium thiosulfate and sulfites (the ammonium, sodium or potassium salt) frequently used in the fixing solution or bleach-fixing solution decomposes due to the high temperature. Moreover, during the evaporation treatment, the water, for example, contained in the waste liquor is vaporized which increases the volume and pressure in the evaporating vessel. Because of this pressure, the above harmful or ill-smelling gases may leak outside the evaporation apparatus which causes great difficulties in the work environment.

To solve these problems, Japanese Utility Model Unexamined Publication No. 70841/1985 discloses a method in which an exhaust gas treating section comprising, for example, activated carbon is provided at an exhaust pipe section of the evaporation treatment apparatus. This method, however, has a serious disadvantage that the vapor from a large quantity of water contained in the waste liquor causes sweating or moisture condensation at the exhaust gas treating section, so that the gas absorption treatment agent is covered with water and instantaneously loses its gas absorption ability. Thus this method has not been put into practical use.

To solve these problems, the present applicants have previously proposed a method of, and an

EP 0 272 883 B1

apparatus for, treating photographic process waste liquor, in which when the waste liquor is evaporated, a heat exchange means capable of condensing the vapor generated by the evaporation is provided and further the condensate water generated by the condensation and uncondensed components are treated, and discharged to the outside.

However, there were found the following problems in the above proposal. The vapor generated by the evaporation treatment, which is condensed by the heat exchange means, may leak outside the apparatus before the vapor is led to the heat exchange means with good efficiency because of the increased pressure in the evaporating vessel during the evaporation treatment. Since this vapor contains particularly ill-smelling harmful gases such as hydrogen sulfide, this arrangement is not preferred from the social and labor environment viewpoints. Also, the uncondensed components having passed through the heat exchange means are discharged outside after they are treated by, for example carbon, but in this treatment it is particularly difficult to remove sufficiently the ill-smelling gas and the activated carbon may immediately lose its activity. Thus, there is a danger that the gas is discharged outside as it is. Still further, it has been revealed that when the waste liquor is treated by evaporation, bumping may occur as the waste liquor in the evaporating vessel is more concentrated, which causes the waste liquor to be scattered on the inner wall of the apparatus and became fixed on the inner wall, which impairs the functions of the apparatus (for example due to corrosion and drive failure). Furthermore, when the waste liquor is heated to concentrate it by evaporation, and particularly when, for example, the automatic processing machine is installed in an office, there may arise the problem that ill-smelling gases such as ammonia or sulfite gas are generated because of the evaporation of the waste liquor containing thiosulfate or ammonium thiosulfate. It is therefore desired to treat the waste liquor without generation of ill-smelling gases inside the automatic processing machine or in the vicinity thereof, without recourse to collection by dealers.

The present invention has been made taking into account the above problems conventionally involved in the art, and seeks to provide a method of concentrating photographic process waste liquor by evaporation that can decrease the amount of harmful or ill-smelling components normally generated by evaporation treatments and which is free from excess concentration at the evaporating section even if a concentration treatment is continuously carried out, thus reducing accidents such as bumping. The invention also seeks to provide a method that can achieve good thermal efficiency, can achieve good evaporation efficiency, can reduce energy costs, which can be used in a compact apparatus, that may cause less bumping during the evaporation treatment, and that can achieve a very great concentration degree of the residue to dryness and which leaves only a small amount of water contained in the waste (sludge), which waste is thus easy to handle.

DE-A-3404248 describes a method for concentrating photographic liquors which comprises distilling the liquors at a temperature of less than $50\,^{\circ}C$.

US-A-3995298 describes a method for concentrating photographic liquors which comprises heating the liquors. A partial vacuum may be used to lower the boiling temperature of the water in the liquor to assist in the evaporation.

The present invention provides a method of concentrating photographic process waste liquor by evaporation, which comprises heating, under reduced pressure, an upper part of the liquor contained in an evaporating vessel to evaporate the liquor in such a manner that the difference between the temperature of the liquor in the vicinity of the heated part and the temperature at a bottom part of the liquor is $5\,^{\circ}C$ or more, and causing a solute in the liquor to settle in the bottom part of the evaporating vessel.

Fig. 1 is a schematic illustration of an automatic processing machine which is equipped with a concentration-by-evaporation teatment apparatus;

Fig. 2 is a schematic illustration showing a more specific example of an apparatus which can be used in this invention;

Fig. 3 to Fig. 6 are schematic illustrations showing other examples;

Fig. 7 is an schematic illustration of an apparatus which has a constitution similar to that in Fig. 3 except that a heater 34 is replaced with a conventional heater 3 as in Fig. 2, and which has a characteristic shape of the evaporating vessel; and

Fig. 8 to Fig. 10 are schematic illustrations showing comparative apparatus.

The temperature at the bottom part of the photographic prosess waste liquor refers to the temperature in the vicinity of the liquor contact with the bottom of the evaporating vessel at the initial stage when the solute begins to settle, and, when settlings are present after settling begins, it refers to the temperature in the vicinity of the interface between the settlings of solute and the photographic process waste liquor.

The effect of this invention is obtained by dehydrating the waste liquor while preventing gases such as ammonia, sulfite gas and hydrogen sulfide from being generated because of the heating and evaporating of ammonium thiosulfate and ammonium sulfite or their corresponding sodium salts and potassium salts

3

present in the liquor. The present invention makes it possible to settle these compounds to remove them from the system.

This invention is based on the surprising discovery that the amount of ammonia and sulfite gas generated by evaporation together with the water vapor generated by evaporation when the liquor is heated can be lowered by a great extent when the heating is carried out under reduced pressure to retard the time of the generation of hydrogen sulfide gas that may begin to generate in the course of the concentration. Therefore this invention is greatly effective when the liquor contains thiosulfate, which is the origin of the generated ammonia, sulfite gas and hydrogen sulfide, and is very greatly effective when the liquor contains ammonium thiosulfate.

The present inventors have previously proposed that the liquor is concentrated by evaporation by heating an upper part of the liquor in such a manner that the difference between the temperature of the liquor in the vicinity of the heated part and the temperature at a bottom part of the liquor is 5° C or more, whereby as the evaporation of the liquor proceeds the concentrated liquid having a greater density descends to the lower part and the upper part comprises a a dilute liquid. Thus the smell and gas generation owing to the thermal decomposition can be remarkably suppressed.

The present inventors further made studies on the above method, and, as a result, found that, although the smell and gas generation owing to the thermal decomposition is expected to decrease by lowering the temperature of the liquor in the vicinity of the heated part, the smell and gas generation is unexpectedly remarkably suppressed in the above method by controlling to a lower level the temperature of the liquor in the vicinity of the heated part while reducing the pressure. In other words, a better effect of suppressing the smell and gas generation is obtained, as a synergistic effect, than the above method previously proposed by the present inventors, by the reduced pressure, and by reducing the temperature of the waste liquor in the vicinity of the heated part by reducing the pressure. It is presently considered that the mechanism for this is that the solubility of solute is lowered by lowering the temperature at the upper part of the evaporating vessel where the waste liquor evaporates, resulting in a reduction of the density of the solute at the upper part of the evaporating vessel, and that the reducing of the pressure affects the convection between the upper part and bottom part of the evaporating vessel to enlarge the density difference of the solute between the upper part and bottom part of the evaporating vessel. This effect exceeds by far the effect obtainable by merely reducing the pressure or carrying out the treatment by lowering the temperature by reducing the pressure.

If the upper part of the evaporating vessel where the evaporation takes place has a high temperature, the temperature at the upper part of the evaporating vessel must be reduced in order to cause the solute to settle efficiently, so that in proportion thereto a greater temperature difference may arise between the upper part and bottom part of the evaporating vessel. Accordingly, the highly concentrated part descending by convection may undergo a so abrupt a temperature change that the settlings formed may become thin and float, and therefore take a long time to deposit at the bottom part. However, if the upper part of the evaporating vessel can be made to have a lower temperature by reducing the pressure, it becomes possible to cause the solute to settle efficiently even with the smaller density difference between the upper part and lower part of the evaporating vessel. Thus there can also be attained the effect that the settlings formed are relatively large and settle more speedily and densely.

In order to obtain the effect of this invention, the pressure is preferably reduced to 610 mmHg (81.3 kPa) or less, more preferably to 520 mmHg (69.3 kPa) or less and particularly preferably to 230 mmHg (30.7 kPa) or less. There is no particular limitation on the lower limit of the pressure but, taking account of the cost of apparatus for reducing pressure, it is preferably not less than 1 mmHg, more preferably not less than 10 mmHg (1.3 kPa) so that simple apparatus can be used.

The temperature of the photographic process waste liquor depends on, for example the type of liquor and the pressure, so it cannot be determined unconditionally. It is generally from 30° C to 100° C. Taking into account the energy cost and the treatment speed for the waste liquor, it is preferably 40° C to 80° C, more preferably 50° C to 70° C.

In this invention, because of the pressure reducing means provided, the temperature of the waste liquor in the evaporating vessel is 100° C or less. For this reason, not only can the heating be effected with lower energy, but also less tar is produced in the concentrate formed by evaporation as compared with the conventional evaporation method. This results in a decrease in the deposits on the wall of the evaporating vessel.

The temperature difference required in this invention is at least 5° C, preferably 10° C or more, and particularly preferably 30° C or more. If feasible on account of the apparatus, a more desirable embodiment is such that the temperature difference is 40° C or more, or 50° C or more. The greater the temperature difference, the more effective is the effect of this invention. As the difference in the solute concentration

4

between the upper part and lower part of the evaporating vessel becomes greater, the evaporation efficiency is be improved. Also there is generated less rank odor and harmful gas, and deposit of settlings readily occurs at the lower part of the evaporating vessel.

In the evaporation process of this invention, the sludge naturally settles to the lower part of the evaporating vessel. Accordingly, in a preferred example, the settlings are continuously removed from the lower part of the evaporating vessel and thereby the waste liquor is automatically fed from the upper part, so that a continuous evaporation treatment can be carried out semipermanently.

The settlings may be continuously taken out by means of an endless belt, a rotatable spiral sleeve or by any other means.

In general, it is desirable to take out the settlings the bottom part of the evaporating vessel by a batch system after a given quantity of waste liquor has been treated. As one of remarkable features of this invention, the temperature at the lower part of the evaporating vessel is so low that the settlings can be taken out during operation without danger and without rank order or harmful gas. Thus extremely safe operation can be conducted.

In the evaporating vessel used in this invention, the waste liquor, which is heated by a heating means provided at the upper part, is concentrated. The concentrated thick liquor goes down to the lower part. Accordingly, the evaporating vessel and necessarily requires a distance from the heating means to the bottom part of the waste liquor.

The longer the above distance is, the more easily the temperature difference can be produced to cause difference in concentration of solute between the heated part and the settling part. The difference also depends on the shape of the evaporating vessel and the size of the heating means, and may be found in advance by experiment. The waste liquor is preferably fed to an upper part of the evaporating vessel.

The pressure reducing means includes, for example, a vacuum pump or an ejector. When an ejector is used, the water fed into the ejector may be led directly from a mains water cock. Preferably stocked water is circulated by means of a pump since this can save piping. In a more preferred embodiment, condensate water is circulated by means of a pump and fed into the ejector.

The pressure reducing means may be directly connected to the evaporating vessel to reduce directly the pressure in the evaporating vessel, or may preferably be provided on a vapor discharging pipe which carries the vapor generated by the evaporation. Alternatively, the vapor generated by the evaporation is led through a vapor discharging pipe to a heat exchange means to condense it and the condensate water is led to a condensate water tank through a condensate water discharging pipe, and the pressure reducing means is provided on the condensate water discharging pipe or on the condensate water tank. As a preferred embodiment when the condensate water is circulated by means of a pump and fed into the ejector, the vapor discharging pipe is directly connected to the ejector and the vapor is led into the condensate water to cool the vapor. In this instance it is possible to use various means to cool the condensate water, for example the stock tank for the condensate water or the circulating pipe for circulating the condensate water is provided with a heat-dissipation plate to cool the condensate water, or cooling water is used or a refrigeration machine is used to cool the condensate water directly or through cooling water, or the condensate water is allowed to fall in the form of a shower to effect heat dissipation.

Another preferred embodiment for circulating the condensate water by means of a pump to feed it into the ejector is one in which the vapor is condensed by a heat exchange means and thereafter the condensate water and part of the vapor are led to the ejector through a condensate water discharging pipe.

As the pressure reducing means, a vacuum pump described in 86/87 Kagakukiki Soran (86/87 Comprehensive Bibliography of Scientific Equipments; compiled and published by Tokyo Kagaku Kiki Kyokai), pp.537-610 can also be used.

Preferred apparatus for use in this invention comprises a means for liquefying the vapor generated by the concentration by evaporation and a means for collecting the vapor thus liquefied, and more preferably comprises a means for cooling the vapor and/or the condensate water used for liquefying the vapor. It also preferably comprises a means for collecting the concentrates obtained.

In this invention, the waste liquor is preferably provided in an amount which depends on the amount of evaporation. In specific instances, the quantity of evaporated and condensate water may be detected or the variation in the quantity of the liquor in the evaporating vessel may be detected. Means for detecting the liquor quantity include means for detecting the weight of the liquid or the liquid level. Among the means for detecting the liquid level, particularly preferred is a means in the evaporating vessel.

A particularly preferred embodiment is one in which the waste liquor is automatically fed in an amount corresponding to the amount decreased by evaporation, according to a bird water-drinking system. This is preferred as a simple continuous treatment system because it requires no equipment such as means for detecting the liquid level and thus the apparatus is inexpensive and simple.

The heating means includes means disposed outside the evaporating vessel, or means immersed in the waste liquor held in the evaporating vessel. The heating means disposed outside includes for example, a far-infrared heater, a hot air type heater, a quartz-sheathed element heater, a pipe heater, a ceramic heater or a plate heater. However, from a viewpoint of evaporation efficiency, particularly preferred is a direct heating system that can directly heat the waste liquor as a whole inside the evaporating vessel. In this instance, the heater is preferably a heater sheathed with a material whose surface is not damaged by the photographic process waste liquor (for example, SUS 316 stainless steel, titanium steel, Hastelloy C, quartz sheath or glass). These heating means are preferably provided with an overheat preventing temperature controller to prevent liquid-empty heating.

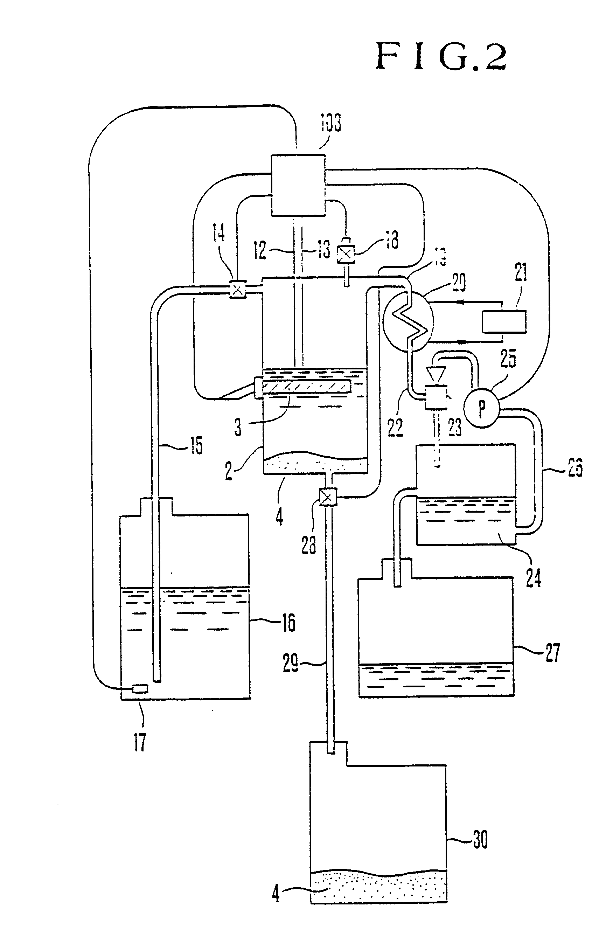

The evaporating vessel is preferably separated into upper and lower parts and a settlings-deposit chamber so that the settlings can be taken out during operation. Particularly preferred is a type in which the upper and lower parts of the evaporating vessel are separated from the settlings-deposit chamber by a ball valve or a solenoid valve so that the settlings can be taken out from a lower part during operation. However, still particularly preferred is a type in which, as shown in Fig. 2, the settlings are continuously taken out from a pipe section of the evaporating vessel, having a U-tube shape and containing no heater.

Constructing the apparatus in the above manner, the evaporation treatment of the waste liquor can be continuously carried out, making it possible for users to treat the liquor with very high efficiency and simplicity.

In this invention, as a working embodiment of a treatment by the batch process, the means for taking out the settlings comprises a bag for discharge of settlings or a screw joint type or instantly detachable type polyethylene bottle provided at a lower part of the evaporating chamber. The settlings can then be thrown away. The bag and bottle are preferably made from an organic resin which can endure a temperature of about $20\,^{\circ}C$ to $90\,^{\circ}C$, for example nylon 6,5 type, nylon 6,6 type, polyamide type, vinyl chloride type or polyethylene type resin.

As a preferred embodiment of this invention, it is possible to pass the condensate water through a gas treating column to the open air. This makes it possible to prevent harmful gas from leaking outside even if it is generated in a trace amount from the condensate water. This can be achieved by introducing the open air from the outside through the gas treating column. In the gas treating column, adsorbents or deodorizers including, for example activated carbon or a zeolite, may be used.

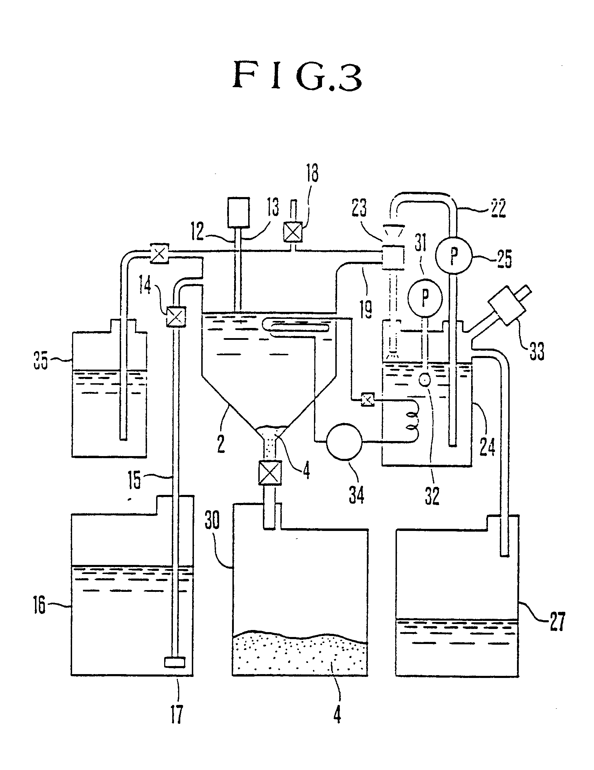

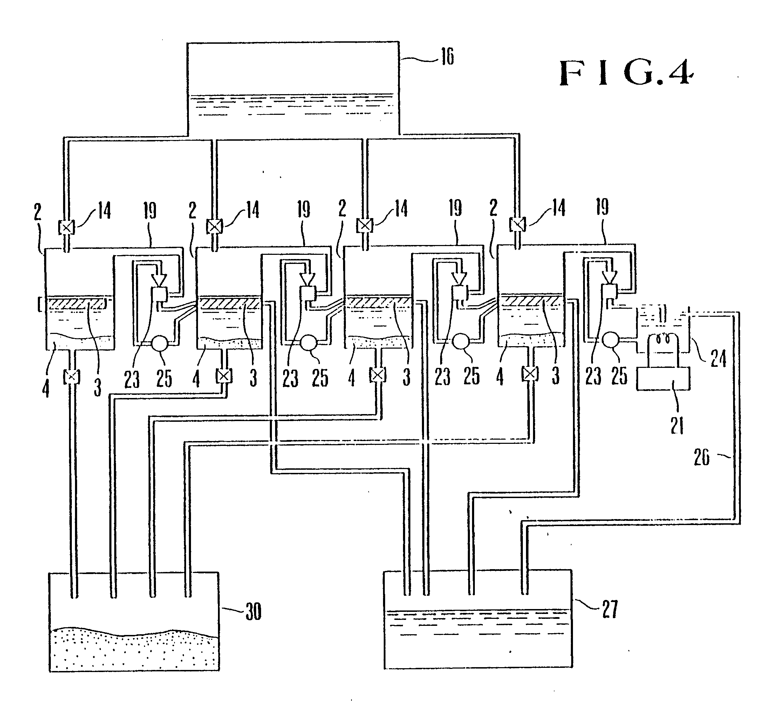

In order to decrease the heating energy cost, it is preferable in this invention to use a large number of evaporating vessels as shown in Fig. 4 and to use the condensate water as a heat source for other vessels. This utilizes the evaporation latent heat which makes up a great part of the heating energy and can greatly decrease the heating cost. In order to decrease the heating cost further is is preferable in this invention to carry out a method in which, as shown in Fig. 3, a transfer medium such as Freon gas, is used to remove heat from the condensate water, on the same principle as that of a cooler or refrigerator, and the heat is provided to the evaporating vessels. In this instance, the heat generation from the treatment apparatus can be made very small, and thus it becomes possible to install the treatment apparatus even in a closed room. Before now the treatment apparatus could not be installed in a closed room due to heat generation.

It may sometimes occur that a trace harmful gas generated when the waste liquor is subjected to the evaporation treatment is dissolved in the condensate water, and, in some cases, components causing great problems in environmental pollution may be mixed therein. For example, it may sometimes occur that sulfite gas, ammonia and hydrogen sulfide gas, and also organic solvents or organic acids such as ethylene glycol, acetic acid, diethylene glycol or benzyl alcohol turned to a gas by azeotropy with water flow out in the condensate water.

For this reason, the condensate water causes great problems in environmental pollution such as BOD and COD and it cannot be discharged as it is into sewerage or rivers. Accordingly in this invention, oxidizing agents or pH adjusters may be added to the condensate water, or, if necessary, a filtering means (particularly containing activated carbon) is preferably provided at a later stage of a section for condensing the vapor generated by evaporation.

To decompose the harmful gas, ozone can, for example be brought into contact with the condensate water. As another preferable means, catalytic combustion using platinum or palladium alloy is used. This means is particularly effective against ammonia gas. Also, as shown in Fig. 3, for example, an air-feeding pump and a gas purger can be used to aerate the condensate water to oxidize the reducible components in the condensate water.

The treatment method of this invention is effective when the waste liquor contains a large quantity of thiosulfate, sulfite and ammonium salts, and in particular, very effective when it contains organic ferric complex salts and thiosulfates.

This invention is especially suited for treating the waste liquor produced with the development processing of light-sensitive photographic materials in an automatic processing machine, in the automatic processing machine itself or in the vicinity thereof. The automatic processing machine, the concentration-by-evaporation treatment apparatus and the photographic process waste liquor are now further described below.

## Automatic processing machine and
## concentration-by-evaporation treatment apparatus

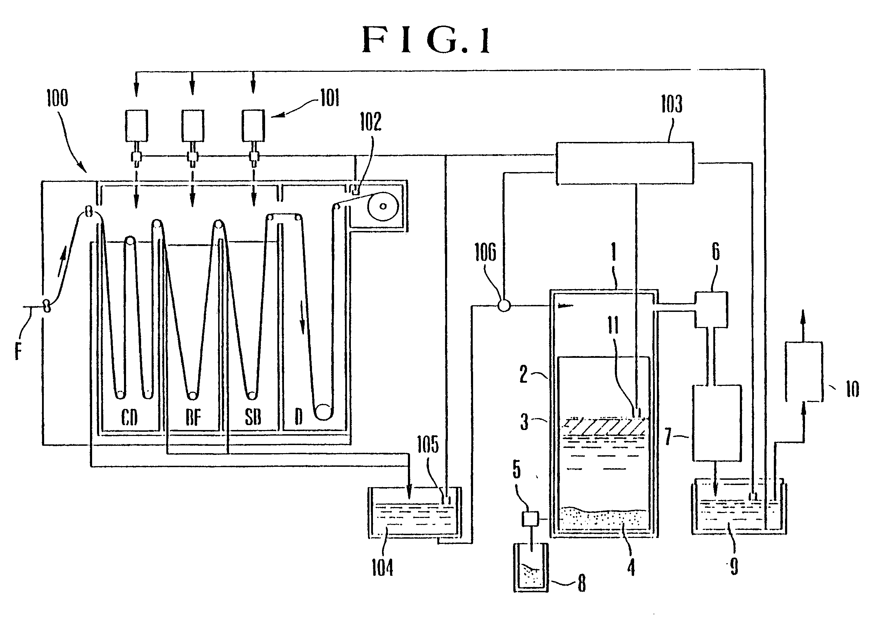

In Fig. 1, the automatic processing machine is denoted by the numeral 100, and the concentration-by-evaporation treatment apparatus is denoted by the numeral 1. The automatic processing machine 100 is of a system in which a rolled light-sensitive photographic material F is continuously guided to a color developing tank CD, a bleach-fixing tank BF and a stabilizing tank SB to effect photographic processing, and rolled up after drying D. The numeral 101 denotes replenishing solution tanks. The amount of the light-sensitive photographic material processed F is detected by a sensor 102, and replenishing solutions are supplied to the respective processing tanks through a controlling device 103 according to information provided by the sensor 102.

Once the replenishing solutions are supplied to the respective photographic processing tanks, overflowed waste liquor is discharged from the processing tanks and collected in a stock tank 104. A simple means for moving the overflowed waste liquor to the stock tank 104 is to allow the waste liquor to naturally drop through a guide tube. In some case it can be forcedly transported, for example by means of a pump.

The concentration-by-evaporation treatment apparatus 1 comprises an evaporating vessel 2, a heating means 3, a discharging means 5 for discharging settlings 4 produced as the concentration by evaporation proceeds, a vapor cooling means 6 and a pressure reducing means 7. The settlings 4 discharged from the discharging means 5 is stocked in a settlings-holding container 8, and the condensate water which has been subjected to pressure-reduction treatment by the pressure reducing means 7 is stocked in a condensate water tank 9. A gas adsorbing means 10, for example comprising a filter or an adsorbent, can be added to the condensate water tank 9.

The heating means 3 includes means utilizing electricity, gas a solar heat or two or more of these in combination. It is capable of heating the waste liquor and concentrating it by evaporation. As the heating method, there can be used a method in which the waste liquor is stocked in the evaporating vessel 2 and the whole is heated, as well as the method described in JP-B-201442/1987. The heating means 3 is positioned at an upper part of the vessel 2, for example inside the waste liquor, or on the outside of the evaporating vessel 2.

The discharging means 5 can be designed in various ways. It includs a known discharging apparatus utilizing a rotary screw pump, or a means in which the concentrated liquid is allowed to naturally fall into a container containing one or more liquid-absorptive resins or solidifying agents, from a bottom part of the evaporating vessel 2 through a valve, and then solidification is effected.

The amount and temperature of the waste liquor in the stock tank 104 are detected by a sensor 105, and the information obtained is stored in a controlling device 103. When it is detected that the stock tank is full the supply of replenishing water is stopped so that additional waste liquor is not discharged, or a pump 106 is driven to feed the waste liquor from the stock tank 104 to the evaporating vessel 2. To prevent misoperation, it is preferable to leave an allowance in the capacity of the stock tank 104, or to provide a plurality of tanks or a reserve tank in advance. In apparatus in which the waste liquor is not treated in a lump but separately treated depending on the nature of the liquor, the liquid amount and liquid temperature are detected for each of the stock tanks 104.

The detection of the temperature of the liquor in the stock tank 104 is important for the operation of the apparatus particularly for the control of the heating temperature.

The waste liquor can be fed from the stock tank 104 to the concentration-by-evaporation treatment apparatus 1 by feeding a given amount thereof in a lump or by feeding a given amount or variable amount in a continuous manner. In the former instance, the feeding from the stock tank 104 to the concentration-by-evaporation treatment apparatus 1 is controlled according to the information detected by the sensor 105 on a decrease in the amount of the liquor in the stock tank 104, or the information detected by a sensor 11 on the amount of waste liquor remaining in the evaporating vessel 2. In this instance, the feeding may be also controlled according to the information detected by a flowmeter provided on the pipe for feeding the waste liquor from the stock tank 104 to the concentration-by-evaporation treatment apparatus 1.

In the method of feeding the waste liquor in a given amount or variable amount, the amount of the liquor to be fed is controlled according to the temperature of the liquor to be fed and the temperature of the heating means 3 or evaporating vessel 2. Alternatively, to keep constant the amount of the liquor to be fed, the amount of the photographic process waste liquor in the concentration-by-evaporation treatment apparatus 1 may be detected by the sensor 11 so that, according to the amount thus detected, the temperature provided by the heating means 3 is raised or lowered or the heating time may be increased or decreased.

The concentration-by-evaporation treatment apparatus 1 is controlled according to the difference between the amount of the waste liquor to be fed and the waste liquor having been treated, or according to the amount of the waste liquor remaining in the apparatus or the amount of the waste liquor having been treated and concentrated.

In the apparatus used in the method of feeding a given amount of the waste liquor in a lump to the concentration-by-evaporation treatment apparatus, it is possible to control the treatment time if the temperature of the waste liquor to be fed and the temperature of the heating means 3 or evaporating vessel 2 have been detected.

The feeding, the treatment (evaporation and concentration) and the discharging of the waste liquor can be controlled according to the various items as described above, but, corresponding thereto, there can be also used a variety of sensors such as the sensor 11 for detecting the time, viscosity, pressure, liquid level, concentration, electrical resistance or weight, The sensor 11 and other sensors can be mounted at various positions.

Photographic process waste liquor

The liquor that can be treated by this invention typicaly includes the waste liquor produced when a light-sensitive silver halide color photographic material is processed. However, the liquor that can be treated is not be limited to this, and includes the waste liquor produced when other light-sensitive silver halide color photographic materials are processed.

Examples

Fig. 2 is a schematic illustration of an example of an apparatus which can be more specifically used in this invention. The heating means 3 is provided inside the evaporating vessel 2 of the concentration-by-evaporation treatment apparatus, and an upper limit liquid level sensor 12 and a lower limit liquid level sensor 13 are provided above this heating means 3 to prevent liquid-empty heating in the evaporating vessel 2. A waste liquor feeding pipe 15 having a solenoid valve 14 is provided at an upper part of the evaporating vessel 2, so that the waste liquor can be fed from a waste liquor tank 16 to the evaporating vessel 2 by actuating the solenoid valve 14. This waste liquor tank 16 is provided with a liquid level sensor 17 for detecting the amount of waste liquor remaining to input the information on this amount to the controlling device 103.

Another solenoid valve 18 for cancelling the reduced pressure is provided at an upper part of the evaporating vessel 2, a vapor-discharging pipe 19 is further connected at an upper part of the evaporating vessel 2, and a condenser 20 is provided on this vapor-discharging pipe 19, so that the water cooled by a refrigerating machine 21 can be circulated therethrough. From the condenser 20, condensate water is introduced into an ejector 23 together with part of the vapor through a condensate water introducing pipe 22, and thereafter stocked in an auxiliary condensate water tank 24. The condensate water in this auxiliary condensate water tank 24 is circulated through a circulating pipe 26 by operation of a pump 25. The condensate water overflowing from this auxiliary condensate water tank 24 is stocked in a condensate water tank 27. A discharging pipe 29 having a solenoid valve 28 is connected to a lower part of the evaporating vessel 2, so that the settlings 4 formed by concentration of the waste liquor can be discharged to a settlings-holding tank 30 by actuating the solenoid valve 28.

To describe an outline of the process of carrying out the heating and evaporation treatment with use of this apparatus, the waste liquor stocked in the waste liquor tank 16 is fed to the evaporating vessel 2 through the waste liquor feeding pipe 15 until the liquid is detected by the upper limit liquid level sensor 12. The waste liquor in the evaporating vessel 2 is heated and evaporated with the heating means 3, but, when the liquid level is lowered until it is detected by the lower limit liquid level sensor 13, the waste liquor is again fed until it reaches the level of the upper limit liquid level sensor 12. The vapor generated by evaporation is sent to the condenser 20 through the vapor-discharging pipe 19 and cooled there. Thereafter the condensate water and vapor are introduced into the ejector 23 through the condensate water introducing pipe 22, and provisionally stocked in the auxiliary condensate water tank 24. This stocked condensate water is further fed to the ejector 23 through the circulating pipe 26 by driving the pump 25, whereby the pressure inside the evaporating vessel 2 is reduced.

As the concentration proceeds, the settlings 4 formed are deposited in the evaporating vessel 2 and replace the waste liquor in the evaporating vessel 2. The liquid level sensor 17 in the waste liquor tank 16 detects that the waste liquor has run short and this information is given by, for example, a warning buzzer or lamp. The heating means 3 is cut off at the same time and the solenoid valve 28 is opened, so that the settlings 4 fall into the settlings-holding tank 30.

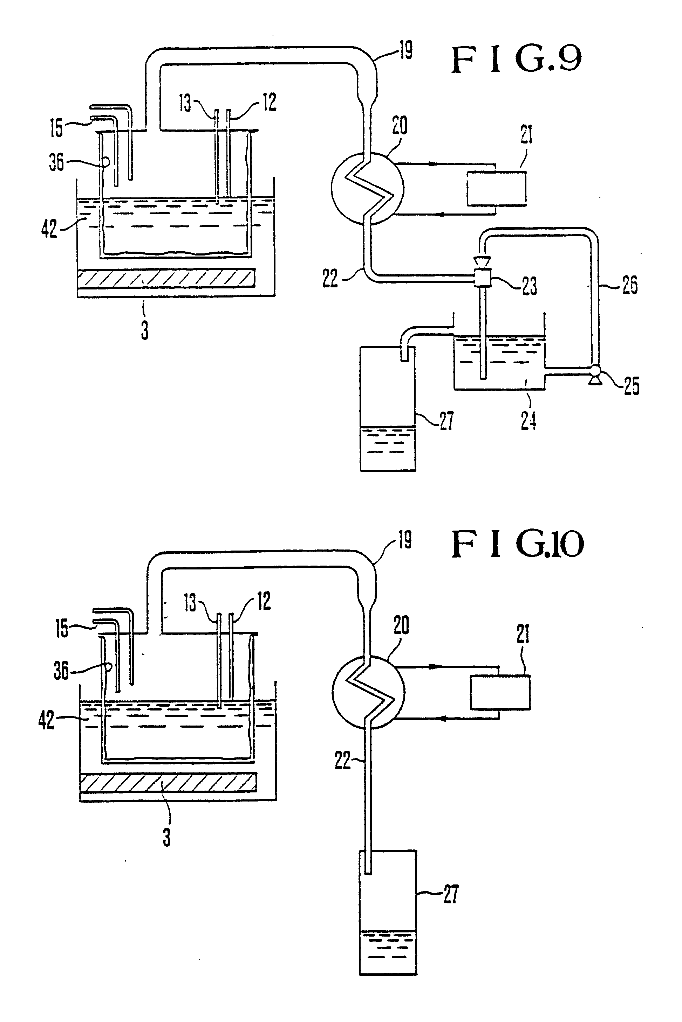

Various shapes of the evaporating vessel 2 of the treatment apparatus are illustrated in the specification and in Fig. 2 to Fig. 8 of the drawings of JP-A-288328/1986; various methods for taking out the settlings are illustrated in Fig. 9 to Fig. 12 of the same; and methods for continuously feeding the photographic process waste liquor are also illustrated in Fig. 13 of the same.

Other examples of apparatus used in this invention employing pressure reducing means are shown in Fig. 3 to Fig. 6. Fig. 3 illustrates an example in which the pressure in an evaporating vessel 2 is reduced by an ejector 23 and thereafter the condensate water is introduced into an auxiliary condensate water tank 24 further equipped with an air-feeding pump 31 and a gas purger 32 to aerate the condensate water to oxidise the reducible components of the condensate water. From the safety viewpoint the auxiliary condensate water tank 24 is provided with a gas adsorbent 33 to prevent the discharge of ill-smelling gas. A heat transfer medium such as freon gas is circulated by a compressor 34 to cool the condensate water so that the heat can be given to the evaporating vessel 2. An agent solution is fed from an agent solution feeding pipe 35 to the waste liquor in the evaporating vessel 2. In Fig. 4, evaporating vessels 2 are provided in large numbers. An upper part of the evaporating vessel 2 located at the left side of the Figure is heated by a heating means 3 and the condensate water from this evaporating vessel 2 is led through an ejector 23 to a compartment at an upper part of the evaporating vessel 2 disposed at the next stage to serve as a heating source. Utilizing the evaporation latent heat in this manner, the heating energy cost can be greatly decreased.

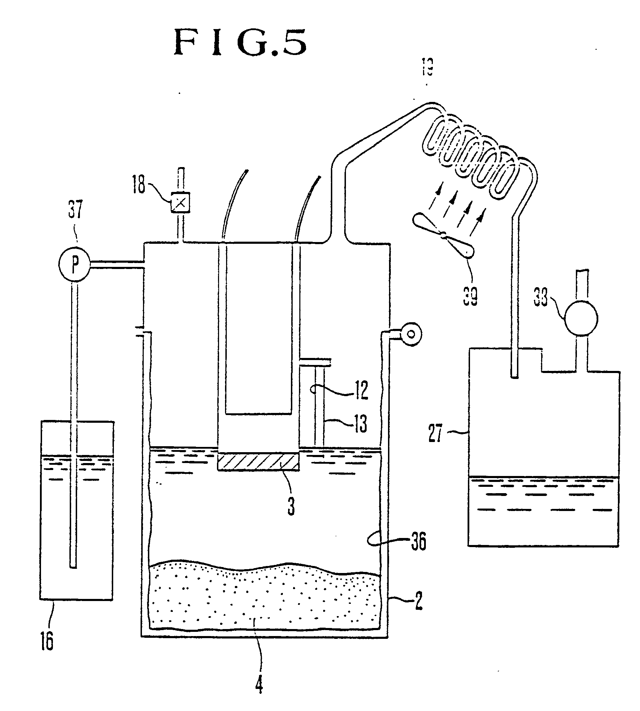

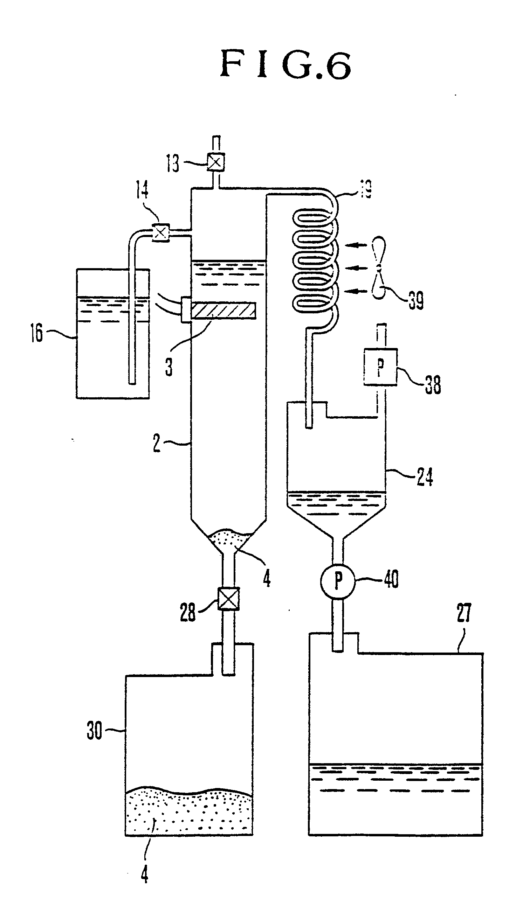

In Fig. 5, the waste liquor is fed to a bag 36 fitted inside the evaporating vessel 2 by a diaphragm pump 37, and the pressure inside the evaporating vessel 2 is reduced by a vacuum pump 38 provided on a condensate water tank 27. The condensate water led from the evaporating vessel 2 to the condensate water tank 27 is cooled by a cooling fan 39 disposed at a cooling section of a vapor-discharging pipe 19. Fig. 6 illustrates an example in which an auxiliary condensate water tank 24 is connected to a condensate water tank 27 through a pump 40, wherein the condensate water in the auxiliary condensate water tank 24 is fed in a very small amount and under high pressure to the condensate water tank 27 by the pump 40.

Test Examples

After imagewise printing on a commercially available color photographic paper, continuous processing was carried out with the following processing steps and processing solutions:

```
Standard processing steps:
(1) Color developing        38°C            3 min
(2) Bleach-fixing           38°C            1 min  30 s
(3) Stabilizing        25°C to 35°C         3 min
(4) Drying             75°C to 100°C        about 2 min
```

Composition of processing solutions:

[Color developing tank solution]

Benzyl alcohol 15 ml
Ethylene glycol 15 ml
Potassium sulfite 2.0 g
Potassium bromide 1.3 g
Sodium chloride 0.2 g
Potassium carbonate 24.0 g
3-Methyl-4-amino-N-ethyl-N-(ß-methanesulfonamideoethyl)aniline sulfate 4.5 g
Brightening agent (a 4,4'-diaminostilbenedisulfonic acid derivative) 1.0 g

Hydroxylamine sulfate 3.0 g
1-Hydroxyethylidene-1,1-diphosphonic acid 0.4 g
Hydroxyethyliminodiacetic acid 5.0 g
Magnesium chloride·hexahydrate 0.7 g
Disodium 1,2-dihydroxybenzene-3,5-disulfonate 0.2 g
Made up to 1 litre with water, and adjusted to pH 10.20 with potassium hydroxide and sulfuric acid.

[Color developing replenishing solution]

Benzyl alcohol 20 ml
Ethylene glycol 20 ml
Potassium sulfite 3.0 g
Potassium carbonate 24.0 g
Hydroxylamine sulfate 4.0 g
3-Methyl-4-amino-N-ethyl-N-(ß-methanesulfonamideoethyl)aniline sulfate 6.0 g
Brightening agent (a 4,4'-diaminostilbenedisulfonic acid derivative) 2.5 g
1-Hydroxyethylidene-1,1-diphosphonic acid 0.5 g
Hydroxethyliminodiacetic acid 5.0 g
Magnesium chloride·hexahydrate 0.8 g
Disodium 1,2-dihydroxybenzene-3,5-disulfonate 0.3 g
Made up to 1 litre with water, and adjusted to pH 10.70 with potassium hydroxide and sulfuric acid.

[Bleach-fixing tank solution]

Ethylenediaminetetraacetic acid ferric ammonium dihydrate 60.3 g
Ethylenediaminetetraacetic acid 3.0 g
Ammonium thiosulfate (a 70 % solution) 100 ml
Ammonium sulfite (a 40 % solution) 27.5 ml Made up to 1 litre with water, and adjusted to pH 7.1 with potassium carbonate or glacial acetic acid.

[Bleach-fixing replenishing solution A]

Ethylenediaminetetraacetic acid ferric ammonium dihydrate 260.0 g
Potassium carbonate 42.0 g
Made up to 1 litre with water.
The pH of this solution is adjusted to 6.7 + 0.1 with acetic acid or ammonia water.

[Bleach-fixing replenishing solution B]

Ammonium thiosulfate (a 70 % solution) 500.0 ml
Ammonium sulfite (a 40 % solution) 250.0 ml
Ethylenediaminetetraacetic acid 17.0 g
Glacial acetic acid. 85.0 ml
Made up to 1 litre with water.
The pH of this solution is adjusted to 5.3 + 0.1 with acetic acid or ammonia water.

[Washing-substitutive stabilizing tank solution and replenishing solution]

Ethylene glycol 1.0 g
2-Methyl-4-isothiazolin-3-one 0.20 g
1-Hydroxyethylidene-1,1-diphosphonic acid (a 60 % solution) 1.0 g
Ammonia water (a 25 % aqueous solution of ammonium hydroxide) 2.0 g
Made up to 1 litre with water, and adjusted to pH 7.0 with 50 % sulfuric acid.

The tanks of an automatic processing machine were filled with the above color developing tank solution, bleach-fixing tank solution and stabilizing tank solution to carry out a running test while processing the above paper sample while supplying the above color developing replenishing solution, bleach-fixing replenishing solutions A and B and stabilizing replenishing solution through a bellows pump at intervals of 3 minutes. The replenishing amount was such that the color developing tank was replenished in an amount of 190 ml, the bleach-fixing tank was replenished in an amount of 50 ml for each of the bleach-fixing replenishing solutions A and B, and the stabilizing tank was replenished with the washing-substitutive stabilizing replenishing solution in an amount of 250 ml, each per 1 $m^2$ of the color photographic paper. The stabilizing tank in the automatic processing machine comprised first to third tanks in the direction of the flow of the sample, wherein the replenishing was carried out from the last tank, the solution overflowed from the last tank into the tank anterior thereto and further the solution overflowed therefrom into the tank further anterior thereto (a multi-tank counter-current system).

The continuous processing was carried out until the total replenishing amount of the washing-substitutive stabilizing solution reached 3 times the capacity of the stabilizing tank.

Test Example 1

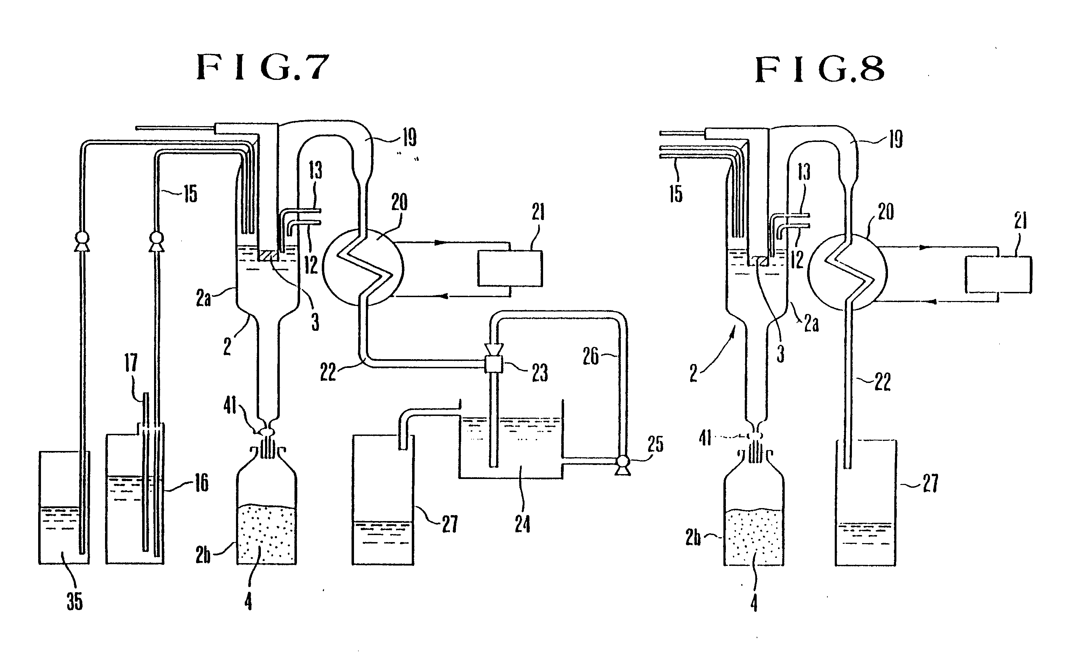

20 litres of photographic process waste liquor in which the three overflowed solutions obtained by processing as above were mixed and treated using the apparatus shown in Fig. 7.

In this Test Example, the concentration by evaporation is carried out by keeping the ball valve 41 open. Accordingly, the settling-holding section 2b serves as part of the evaporating vessel 2 together with the liquid-holding section (reservoir section) 2a.

Comparative treatment apparatus B to D other than the treatment apparatus A shown in Fig. 7 are shown in Fig. 8 to Fig. 10, and similar comparative tests were carried out using the treatment apparatus B to D. Fig. 8 shows a comparative apparatus which does not contain a pressure reducing means; the evaporating vessel 2 and the waste liquor feeding section have the same construction as those in the treatment apparatus shown in Fig. 7. The vapor generated by evaporation is cooled and condensed by a condenser 20, and stocked in a condensate water tank 27. Fig. 9 shows a treatment apparatus containing a pressure reducing means similar to that in Fig. 7 but, in this instance, the heating means 3 is provided in a silicone oil bath 42, so that the bottom part of the evaporating vessel 2 is heated by the heated silicone oil bath 42. After the concentration is completed, the concentrate is removed from the evaporating vessel 2 together with a bag 36 by opening an upper part of the evaporating vessel 2. Fig. 10 shows an apparatus in which the pressure reducing means is removed from the treatment apparatus shown in Fig. 9; the evaporating vessel 2 has the same construction as in the treatment apparatus shown in Fig. 9.

In treatment apparatus A and C, the pressure was reduced to 55 mmHg. In treatment apparatus A and B, the distance between the heating means 3 and the bottom part of the waste liquor was controlled by means of the mounting position of the heating means 3 so as to give a temperature difference of 10°C between the vicinity of the heated part and the bottom of the waste liquor. The capacity of the evaporating vessel 2 at the position lower than the lower limit liquid level sensor 13 was 2.0 litres in each case. In treatment apparatus A and comparative treatment apparatus B, the capacity of 2.0 litres included the capacity of the settlings-holding section 2b. The heating means 3 had a heat capacity of 1.5 kW in each case.

The process of evaporation using the treatment apparatus A to D was observed, and the stage when bumping takes place as the concentration increases is set out in Table 1. The time until the evaporation treatment is completed is also measured and set out in Table 1.

The gas (ammonia and hydrogen sulfide) on the liquid surface of the condensate water in the condensate water tank 27 is detected at the time when 30 litres of the waste liquor stocked in the waste liquor tank 9 was fed to the evaporating vessel 2. The results thus obtained are also set out in Table 1.

EP 0 272 883 B1

## Table 1

| Treatment apparatus | Stage at which bumping begins *1 | Time required (hr) | Ammonia gas (ppm) | Hydrogen sulfide gas (ppm) |
|---|---|---|---|---|
| A (Fig. 7 Invention) | No bumping | 14 | 5 | 0 |
| B (Fig. 8 Comparative) | No bumping | 16 | 100 | 20 |
| C (Fig. 9 Comparative) | 25 l | 20 | 150 | 30 |
| D (Fig. 10 Comparative) | 16 l | 22 | 200 | 50 |

*1:  Indicated in terms of the quantity of the waste liquor fed from the waste liquor tank 16 to the evaporating vessel 2.

As is clear from Table 1, in treatment apparatus A used in this invention, bumping does not readily take place, the time required for the evaporation to be completed is short, and gases are generated in a less amount, as compared with comparative treatment apparatus B to D.

The residues obtained after treatment by treatment apparatus D were in the form of sludge concentrated to a degree of about 1/13, about 1/15 in treatment apparatus C and about 1/30 in treatment apparatus B, but the sludge obtained by treatment apparatus A was concentrated to a higher degree, and found to comprise settlings concentrated to 1/35 or more of the initial waste liquor.

The settlings-holding section had so low a temperature in each of treatment apparatus A, B and C that it was possible to detach it in 1 hour, or, particularly in treatment apparatus A and B, immediately. However, in treatment apparatus D, it was impossible to remove the bag 36 until it had been left overnight.

Test Example 2

Using treatment apparatus A shown in Fig. 7 and treatment apparatus B shown in Fig. 10, the treatment was repeated in the same manner as in Test Example 1. However, the voltage to the pump for reducing the pressure was changed to vary the pressure in the evaporating vessel 2 as shown in Table 2, and at the same time the heat capacity of the heating means 3 was changed to vary the temperature of the waste liquor in the vicinity of the heated part as shown in Table 2. The temperature at the bottom part of the waste liquor was kept at 25°C in each case by changing the position of the heating means 3.

The time required for treating 30 litres of the waste liquor was also measured to obtain the results shown in Table 2. The amount of waste liquor fed to the evaporating vessel 2 in 30 hours was measured when more than 30 hours was required for the complete treatment.

Table 2

| | Pressure in evaporating vessel (mmHg) | Temp. of photographic process waste liquor in the vicinity of the heated part ($^{o}$C) | Treatment time (h) | Amount of photographic process waste liquor fed to evaporating vessel (litres) | Ammonia gas (ppm) | Hydrogen sulfide gas (ppm) |
|---|---|---|---|---|---|---|
| Treatment apparatus A | 610 | 95 | 16 | 30 | 70 | 15 |
| | | 70 | - | 25 | 50 | 13 |
| | | 40 | - | -20 | 20 | 10 |
| | 520 | 90 | 17 | 30 | 50 | 11 |
| | | 70 | 26 | 30 | 40 | 9 |
| | | 40 | - | 25 | 15 | 10 |
| | 230 | 70 | 15 | 30 | 30 | 7 |
| | | 40 | 25 | 30 | 8 | 5 |
| | | 30 | - | 25 | 5 | 2 |
| | 50 | 40 | 13 | 30 | 4 | 0 |
| | | 35 | 20 | 30 | 4 | 0 |
| | | 30 | 25 | 30 | 3 | 0 |
| Treatment apparatus B | - | 100 | 25 | 30 | 90 | 20 |
| | - | 90 | - | 25 | 80 | 20 |
| | - | 70 | - | 20 | 70 | 15 |

As is clear from Table 2, the generation of ammonia gas and hydrogen sulfide gas can be suppressed in treatment apparatus B by lowering the temperature of the waste liquor in the vicinity of the heated part, but a very long treatment time is required. In contrast thereto, in treatment apparatus A in which the pressure in the evaporating vessel 2 was reduced, the normal increase in the treatment time caused by the temperature fall of the waste liquor in the vicinity of the heated part did not occur, and also the generation of ammonia gas and hydrogen sulfide gas was suppressed by the synergistic effect caused by the reduced pressure and by the temperature fall of the waste liquor in the vicinity of the heated part.

## Claims

1. A method of concentrating photographic process waste liquor by evaporation which comprises heating, under reduced pressure, an upper part of the liquor contained in an evaporating vessel to evaporate the liquor in such a manner that the difference between the temperature of the liquor in the vicinity of the heated part and the temperature at a bottom part of the waste liquor is 5°C or more, and causing a solute in the liquor to settle in the bottom part of the evaporating vessel.

2. A method according to claim 1 wherein the reduced pressure is 610 mmHg (81.3 kPa) or less.

3. A method according to claim 2 wherein the reduced pressure is 520 mmHg (69.3 kPa) or less.

4. A method according to claim 2 wherein the reduced pressure is 10 to 610 mmHg (1.3 to 81.3 kPa).

5. A method according to any one of the preceding claims wherein the liquor contains thiosulfates, sulfites or ammonium salts.

6. A method according to any one of the preceding claims wherein additional photographic process waste liquor to be treated is continuously and/or intermittently added in an amount which depends on the decrease in said photographic process waste liquor.

7. A method according to any one of the preceding claims wherein said settled solute is removed.

8. A method according to claim 7 wherein said settled solute is removed during the concentration process.

## Revendications

1. Procédé pour la concentration par évaporation des liqueurs résiduaires de traitements photographiques, comprenant les opérations consistant à chauffer, sous pression réduite, une partie supérieure de la liqueur contenue dans un récipient d'évaporation, afin d'évaporer la liqueur de façon que la différence entre la température de la liqueur au voisinage de la partie chauffée et la température au fond de la liqueur résiduaire soit de 5°C ou plus, et à forcer un soluté contenu dans la liqueur à se déposer au fond du récipient d'évaporation.

2. Procédé selon la revendication 1, dans lequel la pression réduite est de 610 mm de Hg (81,3 kPa) ou moins.

3. Procédé selon la revendication 2, dans lequel la pression réduite est de 520 mm de Hg (69,3 kPa) ou moins.

4. Procédé selon la revendication 2, dans lequel la pression réduite est de 10 à 610 mm de Hg (1,3 à 81,3 kPa).

5. Procédé selon l'une quelconque des revendications précédentes, dans lequel la liqueur contient des thiosulfates, des sulfites ou des sels d'ammonium.

6. Procédé selon l'une quelconque des revendications précédentes, dans lequel une quantité supplémentaire de la liqueur résiduaire de traitements photographiques à traiter est introduite en continu et/ou de façon intermittente, en une proportion qui dépend de la diminution de la quantité dans ladite liqueur résiduaire de traitement photographiques.

7. Procédé selon l'une quelconque des revendications précédentes, dans lequel ledit soluté déposé est éliminé.

8. Procédé selon la revendication 7, dans lequel ledit soluté déposé est éliminé pendant l'opération de concentration.

**Patentansprüche**

1. Verfahren zum Konzentrieren eines flüssigen Abfalls aus einem photographischen Prozeß durch Verdampfen, bei dem man unter vermindertem Druck zur Verdampfung der Flüssigkeit einen oberen Teil der in einem Verdampfungsgefäß enthaltenen Flüssigkeit derart erwärmt, daß der Unterschied zwischen der Temperatur der Flüssigkeit in der Nachbarschaft des erwärmten Teils und der Temperatur in einem unteren Teil des flüssigen Abfalls 5°C oder mehr beträgt, und sich in der Flüssigkeit Gelöstes am Bodenteil des Verdampfungsgefäßes absetzen läßt.

2. Verfahren nach Anspruch 1, dadurch gekennzeichnet, daß der verminderte Druck 610 mmHg (81,3 kPa) oder weniger beträgt.

3. Verfahren nach Anspruch 2, dadurch gekennzeichnet, daß der verminderte Druck 520 mmHg (69,3 kPa) oder weniger beträgt.

4. Verfahren nach Anspruch 2, dadurch gekennzeichnet, daß der verminderte Druck 10 - 610 mmHg (1,3 - 81,3 kPa) beträgt.

5. Verfahren nach einem der vorhergehenden Ansprüche, dadurch gekennzeichnet, daß die Flüssigkeit Thiosulfate, Sulfite oder Ammoniumsalze enthält.

6. Verfahren nach einem der vorhergehenden Ansprüche, dadurch gekennzeichnet, daß man weiteren zu behandelnden flüssigen Abfall aus einem photographischen Prozeß kontinuierlich und/oder intermittierend in einer Menge, die von der Abnahme des flüssigen Abfalls aus dem photographischen Prozeß abhängt, zugibt.

7. Verfahren nach einem der vorhergehenden Ansprüche, dadurch gekennzeichnet, daß man abgesetztes Gelöstes entfernt.

8. Verfahren nach Anspruch 7, dadurch gekennzeichnet, daß man das abgesetzte Gelöste während des Konzentrationsverfahrens entfernt.

# FIG.1

EP 0 272 883 B1

# FIG.2

# F I G.3

F I G.4

EP 0 272 883 B1

# F I G.5

# F I G.6

# FIG.7

# FIG.8

EP 0 272 883 B1

FIG.9

FIG.10